# EUROPEAN PATENT APPLICATION

(11) **EP 4 787 330 A1**
(43) Date of publication of application: **05.08.2026**
(21) Application number: 26155097.4
(22) Date of filing: 29.01.2026
(51) Int. Cl.: G06V 10/25, G06V 10/774, G06V 10/82

(54) **CROPPING-BASED IMAGE CLASSIFICATION**

(30) Priority: 31.01.2025 US 202519043237
(71) Applicant: Schneider Electric USA, Inc., Andover, MA 01810 (US)
(72) Inventor: Abdali, Aymane, Brest (FR); Boguslawski, Bartosz, Grenoble (FR); Gripon, Vincent, Brest (FR); Drumetz, Lucas, Brest (FR)
(74) Representative: Manitz Finsterwald Patent- und Rechtsanwaltspartnerschaft mbB

(57) **Abstract**

Systems/methods provide more efficient training of ML models used to classify objects within images and videos. The systems/methods provide an augmented training dataset that crops each image and retains a portion of the image context. The image cropping may be done by manually, semi-manually, or automatically identifying a location or coordinates of an object within an image, then cropping a predefined area around the image. The cropping may be performed once for each image, or multiple crops may be performed for each image, each cropping involving a different predefined area around the image depending on the method used to identify the coordinates of the object within the image. The resulting augmented set of images is then used to train, or further train, the ML models. Such an arrangement provides ML models that have improved object disambiguation and greater classification accuracy, and are especially useful in applications involving transfer learning.

## Description

### TECHNICAL FIELD

Embodiments of the present disclosure relate to the use of artificial intelligence (AI), or machine learning (ML), to classify objects within images and videos and, more particularly, to systems and methods that provide more efficient training of ML models used to classify objects within images and videos.

### BACKGROUND

Image classification generally refers to the use of ML models to classify objects present in images and videos. The models learn to recognize patterns and features within an image that are indicative of a particular class of objects. For example, a trained image classification model can differentiate between various species of birds, classify everyday objects, such as traffic lights and vehicles, and the like. The process typically involves training an ML model to classify specific objects by exposing the model to images, videos, and other training data that contain the target objects. From the training data, the model learns to classify target objects based on certain physical features and characteristics that distinguish the objects. The model then looks for statistically similar patterns in subsequent images and videos to classify the objects in the images and videos.

Training and developing an ML-based image classification model has heretofore been an enormously complex undertaking requiring extensive computing resources and highly skilled technical personnel working together in a coordinated effort. Recent advancements, whether through model fine-tuning or more sophisticated methods, have resulted in models that can rapidly learn from smaller datasets compared to earlier techniques. However, while a number of advances have been made in the of field image classification, improvements are continually needed.

### SUMMARY

Embodiments of the present disclosure relate to systems and methods for providing more efficient training of ML models used to classify objects within images and videos. The systems and methods provide an augmented training dataset that crops each image and retains a portion of the image context. The image cropping may be done by manually, semi-manually, or automatically acquiring or otherwise identifying a location or coordinates of an object within an image, then cropping a predefined area around the image. The cropping may be performed once for each image, or multiple crops may be performed for each image, each cropping involving a different predefined area around the image depending on the method used to identify the location or coordinates of the object within the image. The resulting augmented set of images is then used to train, or further train, the ML models. Such an arrangement provides ML models that have improved object disambiguation and greater classification accuracy, and are especially useful in applications involving transfer learning.

In general, in one aspect, embodiments of the present disclosure relate to a system for performing image classification using a machine learning (ML) based model. The system comprises, among other things, a processor and a storage unit communicatively coupled to the processor. The storage unit stores an image processing application thereon that, when executed by the processor, causes the system to perform a process that obtains a plurality of images from at least one digital camera according to a particular use case, each image in the plurality of images having an object of interest therein. The image processing application, when executed by the processor, also causes the system to perform a process that applies the ML based model to each image in the plurality of images to determine a classification for the object of interest within the image based on the particular use case. The image processing application, when executed by the processor, further causes the system perform a process that detects whether an anomaly is present in the particular case based on the classification of the object of interest within the image, and perform a process that initiates a corrective action in response to detection of the anomaly for the particular use case. The ML based model is trained using a subset of images in the plurality of images and at least one cropped version of each image in the subset of images, wherein cropping is performed based on a method used to obtain a location of an object of interest within each image in the subset of images.

In general, in another aspect, embodiments of the present disclosure relate to a method of performing image classification using a machine learning (ML) based model. The method comprises, among other things, obtaining a plurality of images from at least one digital camera according to a particular use case, each image in the plurality of images having an object of interest therein, and applying the ML based model to each image in the plurality of images to determine a classification for the object of interest within the image based on the particular use case. The method further comprises detecting whether an anomaly is present in the particular use case based on the classification of the object of interest within the image, and initiating a corrective action in response to detection of the anomaly for the particular use case. The ML based model is trained using a subset of images in the plurality of images and at least one cropped version of each image in the subset of images, wherein cropping is performed based on a method used to obtain a location of an object of interest within each image in the subset of images.

In general, in yet another aspect, embodiments of the present disclosure relate to a non-transitory computer-readable medium storing computer-readable instructions thereon. The computer-readable instructions comprises instructions for causing a processor to, among other things, obtain a plurality of images from at least one digital camera according to a particular use case, each image in the plurality of images having an object of interest therein. The instructions also cause the processor to apply the ML based model to each image in the plurality of images to determine a classification for the object of interest within the image based on the particular use case. The instructions further cause the processor to detect whether an anomaly is present in the particular use case based on the classification of the object of interest within the image, and initiate a corrective action in response to detection of the anomaly for the particular use case. The ML based model is trained using a subset of images in the plurality of images and at least one cropped version of each image in the subset of images, wherein cropping is performed based on a method used to obtain a location of an object of interest within each image in the subset of images.

In accordance with any one or more of the foregoing embodiments, the method used to obtain the location of the object of interest within the images in the subset of images is a manual object identification method, and the cropping of the images in the subset of images is performed one time for each image, the cropping forming a context window around the object of interest within the image that encompasses a predefined amount of context around the object.

In accordance with any one or more of the foregoing embodiments, the method used to obtain the location of the object of interest within the images in the subset of images is a semi-manual object identification method, and the cropping of the images in the subset of images is performed multiple times for each image, the cropping forming a context window around the object of interest within the image, the context window formed by each cropping encompassing a predefined amount of context around the object that is different from the context window formed by another cropping.

In accordance with any one or more of the foregoing embodiments, the method used to obtain the location of the object of interest within the images in the subset of images is an automatic object identification method, and the cropping of the images in the subset of images is performed multiple times for each image, the cropping forming a context window around the object of interest within the image, the context window formed by each cropping encompassing a predefined amount of context around the object that is different from the context window formed by another cropping.

### BRIEF DESCRIPTION OF THE DRAWINGS

The foregoing and other advantages of the disclosed embodiments will become apparent upon reading the following detailed description and upon reference to the drawings, wherein:
FIG. 1 illustrates an exemplary system for ML-based image classification in accordance with embodiments of this disclosure;
FIG. 2 illustrates an exemplary augmentation process for an ML-based image classification system in accordance with embodiments of this disclosure;
FIG. 3 illustrates an exemplary augmentation user interface for an ML-based image classification system in accordance with embodiments of this disclosure;
FIGS. 4A-4C illustrate exemplary methods of locating an object within an image for an ML-based image classification system according to embodiments of the disclosure;
FIG. 5 illustrates an exemplary method for implementing an ML-based image classification system in accordance with embodiments of this disclosure;
FIG. 6 illustrates exemplary graphs that compare classification performance using ML models trained using the augmentation disclosed herein and a baseline;
FIG. 7 illustrates exemplary charts that illustrate inferencing on specific crops of test images as opposed to the entire image;
FIG. 8 illustrates exemplary graphs that illustrate the impact of cropping on CLIP latent representation of images;
FIG. 9 illustrates exemplary graphs 900 that show a two-dimensional visualization of the feature space showcasing class distributions;
FIG. 10 illustrates exemplary charts that compare different methods for augmenting a support set using bounding boxes centered on the object of interest;
FIG. 11 illustrates an exemplary computing device that may be used to implement various embodiments of this disclosure; and
FIG. 12 illustrates an exemplary storage system that may be used to implement various embodiments of this disclosure.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

As alluded to above, recent advances in image classification techniques, whether through model fine-tuning or more sophisticated methods, have resulted in models that can be trained to accurately classify images using smaller datasets compared to earlier techniques. One example is Few-Shot Learning (FSL), a technique that can train models to classify new objects using only a small number of images or "shots" for each class of objects, the set of images used for training a class being a "support set" for that class. Few-Shot adaptations have been applied to train several large models on diverse image datasets, such as CLIP (Contrastive Language-Image Pretraining) and DINO (Distillation with No Labels), to produce accurate classification benchmarks. However, image ambiguities stemming from extraneous objects in an image or complex image backgrounds often lead to significant misclassification of an object, particular when the models are used in applications involving transfer learning where a model trained for one type of objects or use case is deployed for a different type of objects or use case.

Embodiments of the present disclosure relate to systems and methods that can more efficiently train ML models used to classify objects within images and videos while at the same time providing measurably improved object disambiguation. The systems and methods augment a training dataset by cropping each image in the dataset and providing a portion of the image context. The image cropping may be done by manually, semi-manually, or automatically acquiring or otherwise identifying a location or coordinates of an object within an image, then cropping a predefined area around the image. The cropping may be performed once for each image, or multiple crops may be performed, each cropping involving a different predefined area around the image, depending on the method used to identify the location or coordinates of the object within the image. The resulting augmented set of images is then used to train, or further train, the ML models. Such an arrangement results in ML models that have improved object disambiguation and greater classification accuracy, and is particularly useful in applications involving transfer learning.

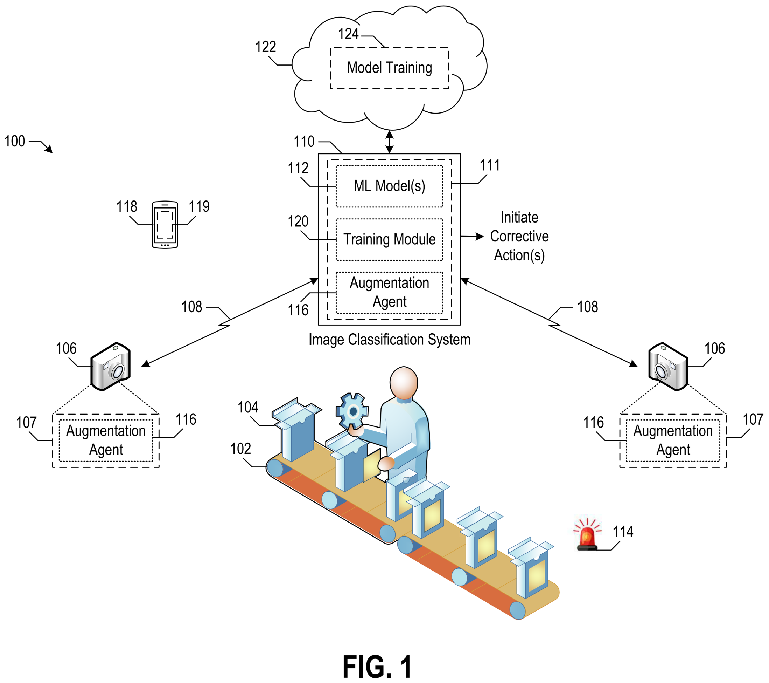

Referring now to FIG. 1, an exemplary image-based product quality monitoring system 100 (and method therefor) is shown that implements, among other things, the image augmentation disclosed herein according to embodiments of the present disclosure. The product quality monitoring system 100 in this example is installed on a typical assembly line having a conveyor belt or similar product conveyance 102 configured to transfer products 104 from one assembly station to a second assembly station. One or more monitoring cameras 106 are installed at specific locations near the conveyor belt 102 to provide visual monitoring of the products 104 as the products 104 travel along the conveyor belt 102 to ensure compliance with company specifications. The monitoring cameras 106 may be any digital industrial grade still-image or video camera suitable for visual product quality monitoring purposes, and are preferably capable of running various image processing applications thereon. An example of a camera that may be suitable for use as the monitoring cameras 106 is the AX series of smart cameras available from Baumer Ltd. of Bristol, Connecticut, USA.

In general operation, the monitoring cameras 106 each have a camera image processing application 107 thereon that is configured to capture images of the products 104 and transmit the captured images over a wired or wireless network connection 108 to an image classification system 110 of the product quality monitoring system 100. Each monitoring camera 106 may be dedicated to a different conveyor belt 102 and/or type of product 104, or multiple cameras 106 may be assigned to monitor the same conveyor belt 102 and/or type of product 104. In either case, the transmitted images are then processed by an image processing application 111 on the image classification system 110 using one or more ML-based image classification models 112 to classify the images. The image processing application 111 thereafter detects any anomalies or noncompliance with company specifications in the products 104 in a known manner based on the classifications of the images by the ML models 112. If the image processing application 111 detects such anomalies, then the image classification system 110 initiates an appropriate corrective action, for example, activating an audio and/or visual alarm 114, or other suitable corrective action depending on the particular anomaly detected.

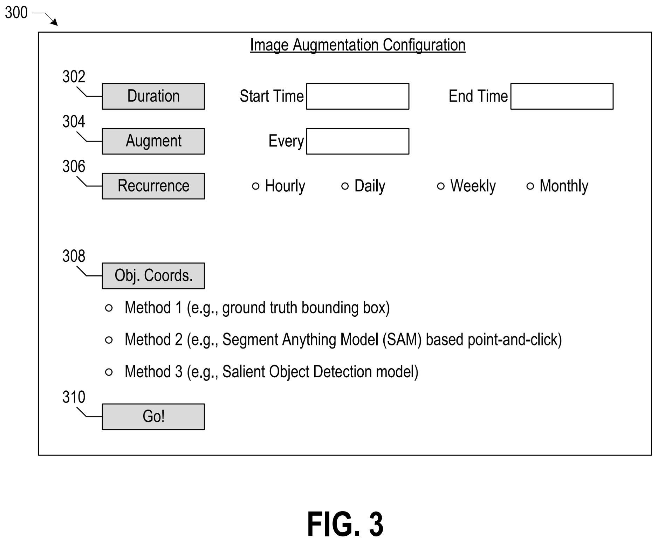

In accordance with embodiments of the present disclosure, some of the images captured by the monitoring cameras 106 may also be designated for use in training, or further training, the ML models 112. To this end, an augmentation agent 116 may be installed or otherwise deployed on the monitoring cameras 106, either as a standalone application or as part of the camera image processing application 107, to provide augmentation of the images designated for training. Each augmentation agent 116 is configured to select a subset of the captured images for use in training the ML models 112, for example, every captured image, or every 100th image captured, during a user-specified time window, and the like. The augmentation agents 116 are then configured to augment the designated training images by cropping each image according to the method used to identify the location or coordinates of the product 104 (i.e., target object) in the image. Configuration of the augmentation agents 116 may be performed by a user via a smart phone or other mobile device 118 running a configuration app 119 thereon (discussed in FIG. 3). Each augmentation agent 116 thereafter transmits, or cause its respective monitoring camera 106 to transmit, the augmented version of the images, together with the original images in some embodiments, to the image classification system 110 to be used in training the ML models 112.

In some embodiments, an augmentation agent 116 may also be installed or otherwise deployed on the image classification system 110, either as a standalone application or as part of the image processing application 111, as an alternative, or in addition, to the monitoring cameras 106. Then, the monitoring cameras 106 may simply transmit their regularly captured, un-augmented, images to the image classification system 110, and the augmentation agent 116 on the system 110 performs the augmentation discussed herein on a subset of the transmitted images. In such embodiments, external datasets from a third-party repository of images (e.g., CLIP, DINO, etc.) may also be downloaded or otherwise provided to the augmentation agent 116 for augmentation and subsequent use in training the ML models 112. Configuration of the augmentation agent 116 on the image classification system 110 may again be performed by a user via a smart phone or other mobile device 118, or a separate user interface running on the image classification system 110.

In some embodiments, a training module 120 may be provided on the image classification system 110 that is configured to train the ML models 112 using the subset of images augmented by the augmentation agents 116. Any suitable ML model training technique may be used with the training module 120 to train the ML models 112, but preferably the training module 120 is configured to implement training techniques, such as Few-Shot Learning, that can train an ML model to recognize new objects using only a small number of images. In some embodiments, the image classification system 110 may be connected to a commercial cloud computing resource 122, such as Amazon Web Services (AWS), that provides a cloud-based model training service 124. In such embodiments, training of the ML models 112 (using the subset of images augmented by the augmentation agents 116) may be performed by the cloud-based model training service 124 as an alternative, or in addition, to the training module 120.

It should be noted that although processing of images is discussed above, those having skill in the art will understand that embodiments of the present disclosure apply equally to processing of videos as well. Additionally, although monitoring product quality on an assembly line is discussed above, those having skill in the art will appreciate that embodiments of the present disclosure apply equally to other image-based industrial use cases, such as power plants and the like, as well as non-industrial use cases, such as security surveillance and the like.

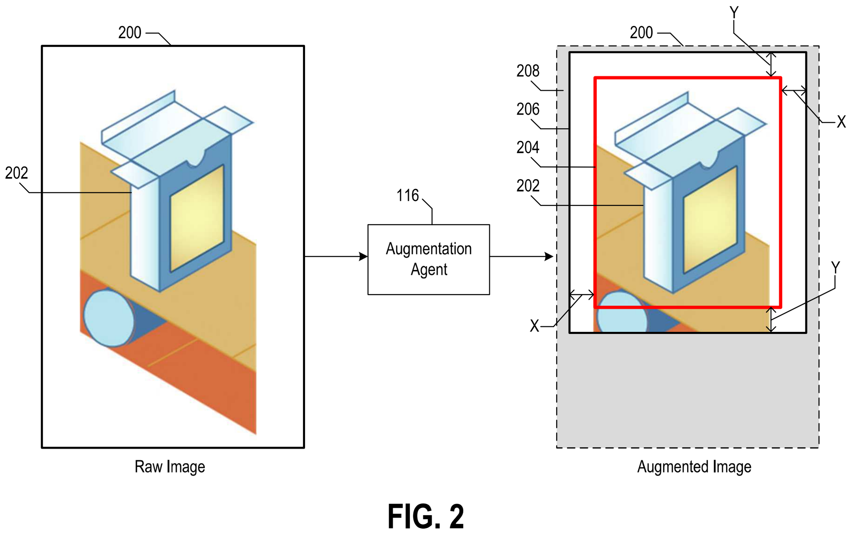

FIG. 2 shows an example of an image 200 captured by the one of the monitoring cameras 106 and thereafter augmented by the augmentation agent 116 on that camera 106 for use in training the ML models 112. As shown on the left-hand side, the image 200 contains an object of interest 202, which is the product 104 in this case, as well as the background environment surrounding the target object 202. The image 200 is subsequently processed by the augmentation agent 116 to reduce the background environment and put the focus of the image on the target object 202. In the present example, the augmentation agent 116 has been configured to crop the image 200 once based on the method the agent 116 used to identify a location or coordinates of the object 202 within the image 200. As can be seen on the right-hand side, the target object 202 now has a bounding box 204 overlaying the object 202, and the image 200 has been cropped, leaving a context window 206 surrounding the bounding box 204 that puts the focus of the image 200 on the target object 202. The context window 206 is spaced apart from the bounding box 204 by a predefined number of pixels X along the top and bottom, which may total 60 pixels in this example (i.e., X = 30 pixels), and a predefined number of pixels Y on the left and right sides, which may again total 60 pixels in this example (i.e., Y = 30 pixels). The cropped part of the image 200 is indicated at 208. Those having skill in the art will appreciate that instead of a number of pixels, a percentage of the image or other quantity measures may be used as a basis for defining the context window 206.

FIG. 3 illustrates an exemplary user interface screen 300 for the configuration app 119 that may be used to configure the augmentation agent 116 in accordance with embodiments of the present disclosure. As mentioned previously, the configuration app 119 may be installed and run on a smart phone or mobile device 118 to allow a user to configure the augmentation agent 116. The user may then use the interface screen 300 of the configuration app 119, or a similar interface screen, to configure various operational aspects of the augmentation agent 116. In the present example, the interface screen 300 includes a button 302 that allows the user to set a duration of an image capture window for the augmentation agent 116 to capture images to be augmented. The interface screen 300 in this example also includes a button 304 that allows the user to specify which images the augmentation agent 116 should augment within the window, for example, every 100th image. A button 306 on the interface screen 300 allows a user to specify how frequently the augmentation agent 116 should perform the image augmentation. A similar interface screen 300 may be provided on the image classification system 110 to allow the user to configure the augmentation agent 116 running thereon. A button 310 initiates augmentation by the augmentation agent 116 in accordance with the user-selected configurations.

As part of its augmentation, the augmentation agent 116 identifies a location or coordinates of an object within an image. In some embodiments, the object coordinates may be identified by determining where a center of the object resides in terms of the number of pixels from the left, right, top, and bottom edges of the image. Other coordinate systems known to those skilled in the art may also be used to identify object location within an image. And the augmentation agent 116 may use one of several known methods for identifying object coordinates within an image. To that end, the interface screen 300 includes a button 308 that allows the user to select one of several methods the augmentation agent 116 will use to identify object coordinates within an image, including Method 1, which may involve manual annotation by a user (e.g., via a ground truth bounding box), Method 2, which may involve semi-manual annotation by the user (e.g., via Segment Anything Model (SAM) based point-and-click), and Method 3, which may be fully automated annotation by the agent 116 (e.g., via a Salient Object Detection model) and require no annotation by the user.

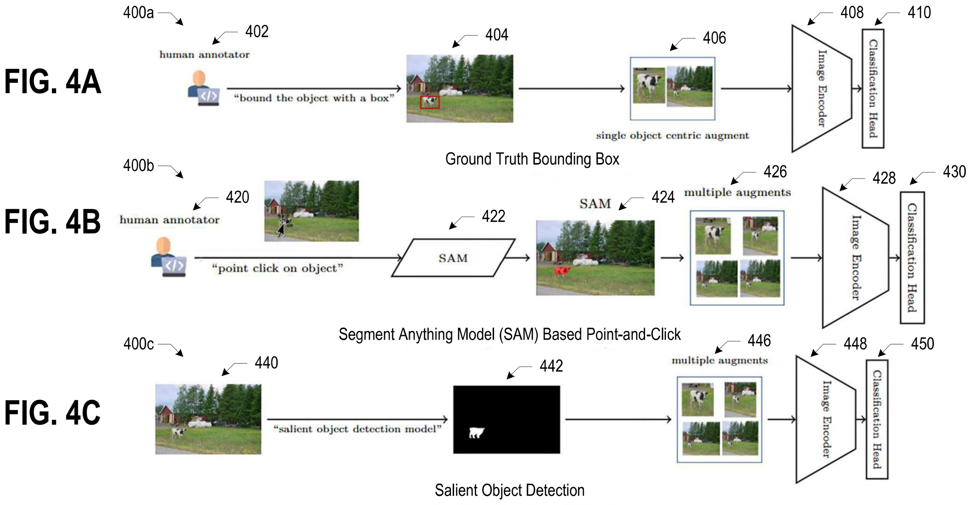

FIGS. 4A-4C illustrate in graphical flow diagram form the methods from FIG. 3 that can be used by the augmentation agent 116 to identify a location or coordinates of an object within an image in some embodiments. As can be seen in FIG. 4A, a graphical flow diagram 400a shows that the ground truth bounding box method (Method 1) begins with the augmentation agent 116 allowing a human annotator to manually apply a bounding box around an object of interest at 402. This manual method of identifying an object location or coordinates is considered to be the most accurate, and produces an image with a bounding box around the object at 404. Because of the assumed higher accuracy, in some embodiments, the augmentation agent 116 crops the image only once, resulting in a context window at 406 surrounding the bounding box and spaced apart therefrom by a predefined number of pixels on each side. The augmentation agent 116 then encodes (e.g., via ResNet50 image encoder) the cropped version of the image and the original image together at 408 to extract relevant features therefrom, and provides the encoded images for use in ML model training at 410.

FIG. 4B depicts a graphical flow diagram 400b showing that the SAM-based point-and-click method (Method 2) begins with the augmentation agent 116 allowing a human annotator to manually pinpoint (e.g., by clicking) the center of an object of interest at 420. The augmentation agent 116 thereafter processes the image using the SAM model at 422 based on or otherwise using the object coordinates identified by the human annotator. This semi-manual method of identifying an object location or coordinates is considered to be less accurate compared to the previous method (Method 1), and produces an image with the object shaded or filled in at 424. Because of the supposed lower accuracy, in some embodiments, the augmentation agent 116 crops the image multiple times at 426. This may include a first crop that encompasses 20 percent of the remaining background or context, a second crop that encompasses 50 percent of the remaining context, and a third crop that encompasses 80 percent of the remaining context. The augmentation agent 116 then encodes (e.g., via ResNet50 image encoder) the cropped versions of the image and the original image together at 428 to extract relevant features therefrom, and provides the encoded images for use in ML model training at 410. The augmentation agent 116 thereafter encodes the cropped image and the original image together at 408, and provides the encoded images for use in training ML models at 430.

FIG. 4C depicts a graphical flow diagram 400c showing that the SAM-based point-and-click method (Method 2) begins with the augmentation agent 116 automatically processing an image using a Salient Object Detection model at 440, which applies a segmentation mask over the object of interest in the image. This fully automated method of identifying an object location or coordinates is also considered to be less accurate compared to the first method (Method 1), and produces an image with a mask over the object of interest at 424. As such, similar to the SAM-based method 400b shown in FIG. 4B, the augmentation agent 116 crops the image multiple times at 446, including a 20 percent crop of the remaining background or context, a 50 percent crop of the remaining context, and an 80 percent crop of the remaining context. The augmentation agent 116 again encodes (e.g., via ResNet50 image encoder) the cropped versions of the image and the original image together at 448 to extract relevant features therefrom, and provides the encoded images for use in ML model training at 450.

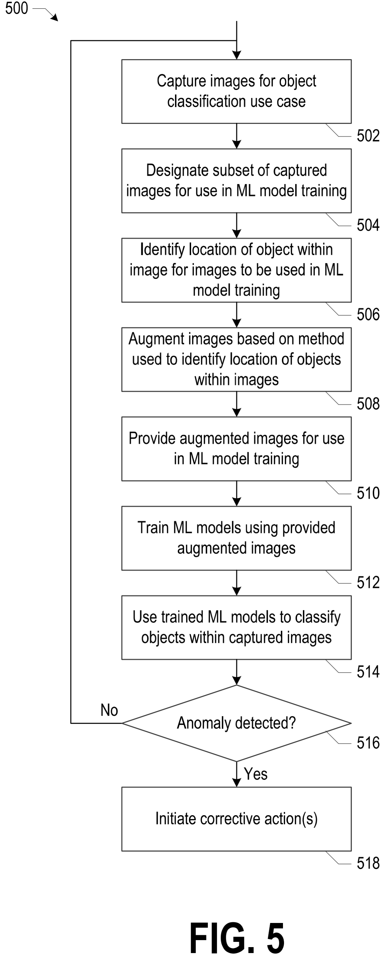

Thus far, several specific exemplary implementations of embodiments of the present disclosure have been shown and described. Following now in FIG. 5 is a method that may be used by or with the various exemplary implementations discussed herein.

Referring to FIG. 5, a flowchart 500 is shown illustrating an exemplary method of augmenting images for use in training ML models to improve object disambiguation and increase classification accuracy. The method generally begins at block 502 where images are captured for use in an object classification use case, such as monitoring product quality on an assembly line for compliance with company specifications. At block 404, a subset of the captured images is designated for use in training and/or retraining the ML models of the object classification use case. At block 506, for each of the images in the subset of images designated for use in ML model training, a location or coordinates of an object within the image is identified. The object coordinates may be expressed in terms of the number of pixels from each edge of the image in some embodiments.

At block 508, each image in the subset of images is augmented based on which method was used to identify the location or coordinates of the object within the image. For example, the augmentation may involve a single crop of the image where a high accuracy manual method like ground truth bounding box was used. Alternatively, multiple crops of the image may be obtained where a less accurate semi-manual method like a SAM-based method or a fully automated method like a Salient Object Detection method was used, each cropped image leaving a different percentage or amount of remaining background or context relative to the other cropped images. At block 510, the cropped versions of the images along with the original images are provided for use in ML model training.

Once model training using the augmented images is completed, then at block 514, the trained ML models are used by an image classification system to classify objects within captured images based on the object classification use case (e.g., product quality monitoring). At block 516, a determination is made, based on the object classifications by the ML models, whether an anomaly is present in the object classification use case, such as products on the assembly being noncompliant with company specifications. If the determination is yes, then at block 518, an appropriate corrective action is initiated, such as activating an audio and/or visual alarm, depending on the anomaly detected. If the determination is no, then the method returns to block 502 to continue capturing images for the object classification use case.

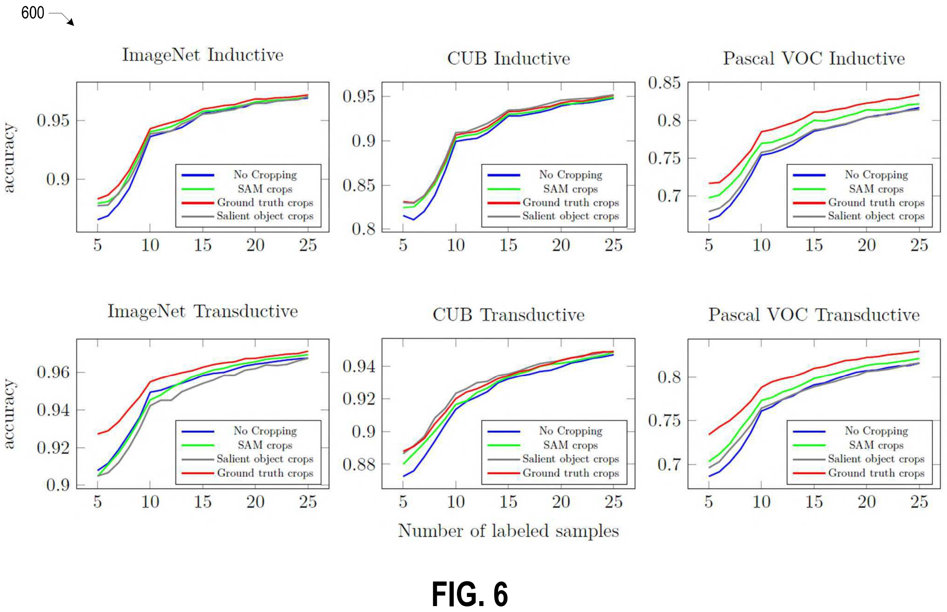

Following now in FIGS. 6-10 are several graphs and charts that demonstrate the efficacy of the image augmentation embodiments discussed herein for training ML based models to perform image classification. These graphs and charts used an ImageNet subset with bounding box information in ImageNet Object Localization Challenge, bird species dataset from CUB (Caltech-University of California San Diego (UCSD)), and Pascal VOC (Visual Object Classes), which has 20 different classes of mainly common objects. For consistency with many works in the literature on Few-Shot visual classification, five Few-Shot tasks were used (i.e., k = 5 classes) and a test set of 100 samples (i.e., nt = 100 samples), along with a support set of five samples (i.e., ns = 5 samples). For inductive settings, a single linear layer was trained on the features from the support set and its augmented set. For transductive settings, in addition to the extracted features from the support set and the augmentations, the models were also trained on pseudolabels generated using a soft K-means algorithm for generating pseudolabels for the query set.

Referring to FIG. 6, a set of graphs 600 are shown that compare classification performance using ML models trained using the augmentation disclosed herein with the crops scenarios discussed above (i.e., Salient Object Detection-generated, SAM-generated crops, and ground truth bounding box crops) and a baseline scenario without any local information about the object of interest. The graphs 600 vary the number of support samples and contrast training solely on this support set with training on the augmented support set created using bounding boxes. As can be seen, incorporating ground truth bounding boxes for augmentation leads to a clear improvement compared to baseline training. A notable 5 percent increase is achieved for both inductive and transductive settings with five labeled samples in the case of Pascal VOC. This improvement is around 2 percent for ImageNet and CUB datasets.

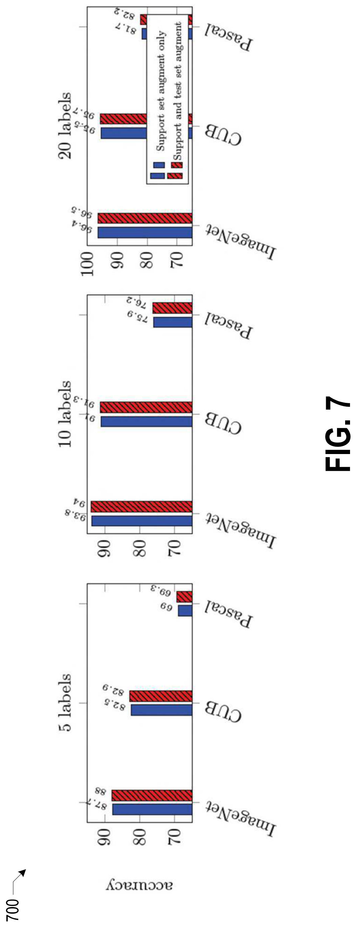

FIG. 7 shows a set of charts 700 that illustrate the advantages of inferencing on specific crops of the test images as opposed to the entire image as a single instance. An inductive setting was used and a training procedure based on the automatically generated masks was employed. The charts 700 show the outcomes of augmenting the test set at inference time through salient object detection. The reported results pertain to all three datasets within 5-label, 10-label, and 20-label scenarios. A comparison is made between prediction results on an unaltered test set and those on an augmented test set using the MOVE (Movable Object Extraction) automatic segmentation model. In both cases, training is performed with the MOVE-augmented support set. Results are based on 1000 runs. As can be seen, the refined inference process leads to small improvements in classification accuracy across all examined support set sizes for all datasets.

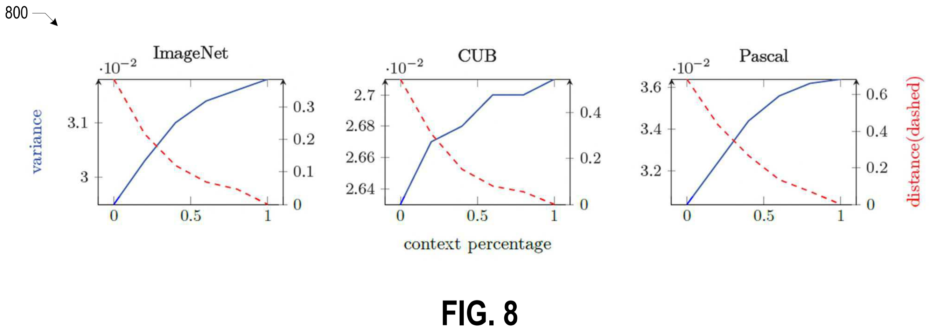

FIG. 8 shows a set of graphs 800 that elucidate the impact of cropping on the CLIP latent representation of images, with a focus on the variance of the class distributions of the latent features and on the distance between the cropped images class centroids and their uncropped counterparts. The analysis encompasses the average across 100 classes for ImageNet, all 20 classes for Pascal VOC, and the 60 training classes of CUB. A random distribution of 100 samples for each class is examined across all datasets. The graphs 800 present the average class variance of the latent representations and average distance to the original uncropped class means for different percentages of context, where 0 corresponds to the minimal crop (i.e., the most compact bounding box), 1 represents the entire image, and intermediate values indicate linear interpolation between the two extremes. A consistent rise in variance can be seen as the contextual information increases contrasted with a decrease in the distance to the original.

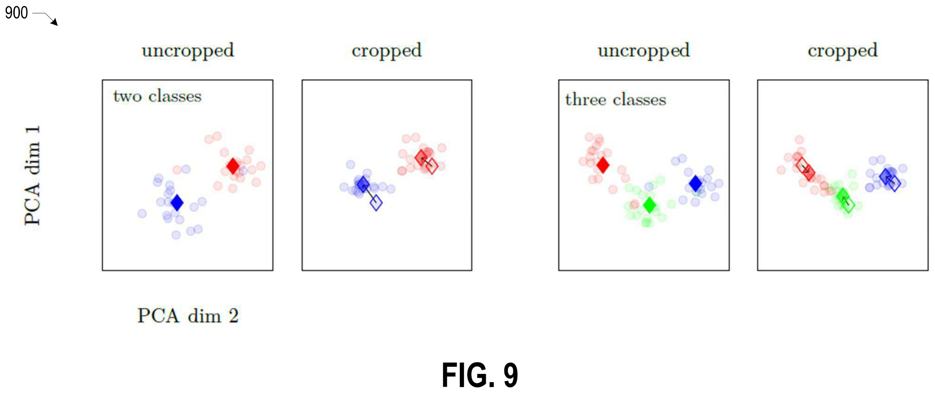

FIG. 9 shows a set of graphs 900 that offers a two-dimensional visualization of the feature space, showcasing class distributions for Pascal VOC. The graphs 900 display 20 random samples (circles) and their centroids (diamond) from two and three random Pascal VOC classes, contrasting the distribution of the latent representation of the uncropped images with the latent representation of the image crops. The "cropped" instance displays again the uncropped centroids as lower opacity diamonds to better showcase the shift. Figure 5 visually demonstrates this effect in a two-dimensional space. The 1024 CLIP features were projected onto a two-dimensional space that retains the most variance for the uncropped dataset, achieved through Principal Component Analysis. Subsequently, random samples were projected from Pascal VOC classes into this space. The resulting clusters corresponding to the classes appear more tightly knit in the case of the cropped samples, indicative of lower variance. Furthermore, a shift can be perceived in the class centroids associated with the cropping.

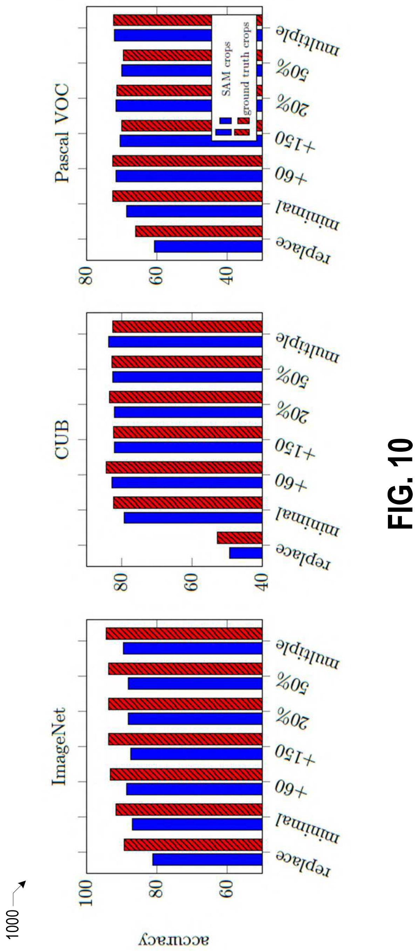

FIG. 10 shows a set of charts 1000 that compare different methods for augmenting the support set using bounding boxes centered on the object of interest across three datasets. This analysis considers both SAM-generated and ground truth bounding boxes, and the reported averages are based on 100 runs for a 5-class, 5-support samples, and 100-test samples. The X-axis is to be interpreted as follows: "replace" means only the crop with an additional 60 pixels of context is used for training, discarding the original image; "minimal" means augmenting the original image with a crop around the bounding box; +X means augmentation with a crop around the bounding box with an additional number of X context pixels in both width and height; X% means augmentation with a resize of the crop that encompasses X percent of the remaining context between the whole image and the minimally augmented crop; and "multiple" means three augmentations are used in addition to the original image: 20 percent, 50 percent, and 80 percent. As can be seen, accuracy is nearly halved when discarding the original whole images. Given this insight, embodiments of the present disclosure preserve the original image and augment it with the crops of various rescaling. In addition, with ground truth bounding boxes, the highest accuracy across datasets is achieved with a fixed context of 60 pixels, whereas for the SAM-generated bounding boxes, the "multiple" mode exhibits a slight advantage.

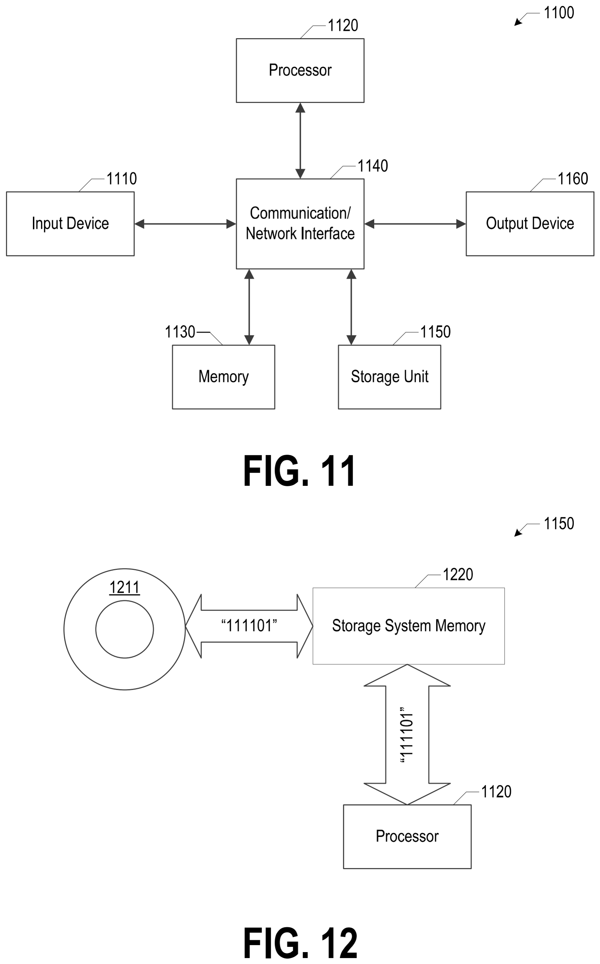

Turning now to FIG. 11, an exemplary computing device 1100 is shown that may be used to implement various embodiments of this disclosure. The computing device 1100 may include a processor 1120 connected to one or more memory devices 1130. Memory 1130 is typically used for storing programs and data during operation of the computing device 1100. The computing device 1100 may also include a storage system 1150 that provides additional storage capacity. Components of the computing device 1100 may be coupled by an interconnection mechanism 1140, which may include one or more busses. The interconnection mechanism 1140 enables communications (e.g., data, instructions) to be exchanged between components of the computing device 1100.

The computing device 1100 also includes one or more inputs 1110 (e.g., for receiving data, instructions) and one or more outputs 1160 (e.g., for providing data, instructions). In addition, the computing device 1100 may contain one or more interfaces (not shown) that connect the computing device 1100 to a communication network (in addition or as an alternative to the interconnection mechanism 1140).

The storage system 1150, shown in greater detail in FIG. 12, typically includes a computer readable and writeable nonvolatile recording medium 1210 in which signals are stored that define a program to be executed by the processor 1120 or information stored on or in the medium 1210 to be processed by the program to perform one or more functions associated with embodiments described herein. To this end, the processor 1120 may be any suitable processing unit, such as a microprocessor, microcontroller, ASIC, and the like, and the medium any suitable recording medium, such as a magnetic or solid-state memory. Typically, in operation, the processor 1120 causes data to be read from the nonvolatile recording medium 1210 into storage system memory 1220 that allows for faster access to the information by the processor than does the medium 1210. This storage system memory 1220 is typically a volatile, random access memory such as a dynamic random-access memory (DRAM) or static memory (SRAM). This storage system memory 1220 may be located in storage system 1150, as shown, or in the system memory 1130. The processor 1120 generally manipulates the data within the memory system 1220 and then copies the data to the medium 1210 after processing is completed. A variety of mechanisms are known for managing data movement between the medium 1210 and the integrated circuit memory element 1220, and the disclosure is not limited thereto. The disclosure is not limited to a particular memory 1220, memory 1130 or storage system 1150.

The computing device 1100 may include specially programmed, special-purpose hardware, for example, an application-specific integrated circuit (ASIC). Aspects of the disclosure may be implemented in software, hardware or firmware, or any combination thereof. Further, such methods, acts, systems, system elements and components thereof may be implemented as part of the computing device described above or as an independent component.

Although the computing device 1100 is shown by way of example as one type of computing device upon which various aspects of the disclosure may be practiced, it should be appreciated that aspects of the disclosure are not limited to being implemented on the computing device as shown in FIG. 11. The computing device 1100 may be a general-purpose computing device that is programmable using a high-level programming language. The computing device 1100 may be also implemented using specially programmed, special purpose hardware. In the computing device 1100, processor 1120 is typically a commercially available processor, such as one of several series of microprocessors available from Intel Corporation, and the like. Various aspects of the disclosure may be practiced on one or more devices having a different architecture or components from that shown in FIG. 11. Further, where functions or processes of embodiments of the disclosure are described herein (or in the claims) as being performed on a processor or controller, such description is intended to include systems that use more than one processor or controller to perform the functions.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

It will be appreciated that the development of an actual commercial application incorporating aspects of the disclosed embodiments will require many implementation-specific decisions to achieve a commercial embodiment. Such implementation specific decisions may include, and likely are not limited to, compliance with system related, business related, government related and other constraints, which may vary by specific implementation, location and from time to time. While a developer's efforts might be considered complex and time consuming, such efforts would nevertheless be a routine undertaking for those of skill in this art having the benefit of this disclosure.

It should also be understood that the embodiments disclosed and taught herein are susceptible to numerous and various modifications and alternative forms. Thus, the use of a singular term, such as, but not limited to, "a" and the like, is not intended as limiting of the number of items. Similarly, any relational terms, such as, but not limited to, "top," "bottom," "left," "right," "upper," "lower," "down," "up," "side," and the like, used in the written description are for clarity in specific reference to the drawings and are not intended to limit the scope of the invention.

This disclosure is not limited in its application to the details of construction and the arrangement of components set forth in the following descriptions or illustrated by the drawings. The disclosure is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e., "including but not limited to."

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or system, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage system, a magnetic storage system, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

One or more portions of the computer system may be distributed across one or more computer systems coupled to a communications network. For example, as discussed above, a computer system that performs annotation and other frontend processing of the images may be located remotely from a computer system that performs training of the image classification models and other backend processing of the images. These computer systems also may be general-purpose computer systems. For example, various aspects of the disclosure may be distributed among one or more computer systems configured to provide a service (e.g., servers) to one or more client computers, or to perform an overall task as part of a distributed system. For example, various aspects of the disclosure may be performed on a client-server or multi-tier system that includes components distributed among one or more server systems that perform various functions according to various embodiments of the disclosure. These components may be executable, intermediate (e.g., IL) or interpreted (e.g., Java) code which communicate over a communication network (e.g., the Internet) using a communication protocol (e.g., TCP/IP).

Various embodiments of the present disclosure may be programmed using an object-oriented programming language, such as SmallTalk, Java, C++, Ada, or C# (C-Sharp). Other object-oriented programming languages may also be used. Alternatively, functional, scripting, and/or logical programming languages may be used, such as BASIC, Fortran, Cobol, TCL, Lua, Python, Rust or basic C. Various aspects of the disclosure may be implemented in a non-programmed environment (e.g., analytics platforms, or documents created in HTML, XML or other format that, when viewed in a window of a browser program render aspects of a graphical-user interface (GUI) or perform other functions). Various aspects of the disclosure may be implemented as programmed or non-programmed elements, or any combination thereof.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware- based systems that perform the specified functions or acts, or combinations of special purpose hardware and computer instructions.

It should also be understood that the above description is intended to be illustrative, and not restrictive. Many other implementation examples are apparent upon reading and understanding the above description. Although the disclosure describes specific examples, it is recognized that the systems and methods of the disclosure are not limited to the examples described herein but may be practiced with modifications within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A system for performing image classification using a machine learning (ML) based model, the system comprising:
a processor;
a storage unit communicatively coupled to the processor, the storage unit storing an image processing application thereon that, when executed by the processor, causes the system to:
perform a process that obtains a plurality of images from at least one digital camera according to a particular use case, each image in the plurality of images having an object of interest therein;
perform a process that applies the ML based model to each image in the plurality of images to determine a classification for the object of interest within the image based on the particular use case;
perform a process that detects whether an anomaly is present in the particular case based on the classification of the object of interest within the image; and
perform a process that initiates a corrective action in response to detection of the anomaly for the particular use case;
wherein the ML based model is trained using a subset of images in the plurality of images and at least one cropped version of each image in the subset of images, and wherein cropping is performed based on a method used to obtain a location of an object of interest within each image in the subset of images.

2. The system of claim 1, wherein the method used to obtain the location of the object of interest within the images in the subset of images is a manual object identification method.

3. The system of claim 2, wherein the cropping of the images in the subset of images is performed one time for each image, the cropping forming a context window around the object of interest within the image that encompasses a predefined amount of context around the object.

4. The system of claim 1, wherein the method used to obtain the location of the object of interest within the images in the subset of images is a semi-manual object identification method.

5. The system of claim 4, wherein the cropping of the images in the subset of images is performed multiple times for each image, the cropping forming a context window around the object of interest within the image, the context window formed by each cropping encompassing a predefined amount of context around the object that is different from the context window formed by another cropping.

6. The system of claim 1, wherein the method used to obtain the location of the object of interest within the images in the subset of images is an automatic object identification method.

7. The system of claim 6, wherein the cropping of the images in the subset of images is performed multiple times for each image, the cropping forming a context window around the object of interest within the image, the context window formed by each cropping encompassing a predefined amount of context around the object that is different from the context window formed by another cropping.

8. A method of performing image classification using a machine learning (ML) based model, the method comprising:
obtaining a plurality of images from at least one digital camera according to a particular use case, each image in the plurality of images having an object of interest therein;
applying the ML based model to each image in the plurality of images to determine a classification for the object of interest within the image based on the particular use case;
detecting whether an anomaly is present in the particular use case based on the classification of the object of interest within the image; and
initiating a corrective action in response to detection of the anomaly for the particular use case;
wherein the ML based model is trained using a subset of images in the plurality of images and at least one cropped version of each image in the subset of images, and wherein cropping is performed based on a method used to obtain a location of an object of interest within each image in the subset of images.

9. The method of claim 8, wherein the method used to obtain the location of the object of interest within the images in the subset of images is a manual object identification method.

10. The method of claim 9, wherein the cropping of the images in the subset of images is performed one time for each image, the cropping forming a context window around the object of interest within the image that encompasses a predefined amount of context around the object.

11. The method of claim 8, wherein the method used to obtain the location of the object of interest within the images in the subset of images is a semi-manual object identification method.

12. The method of claim 10, wherein the cropping of the images in the subset of images is performed multiple times for each image, the cropping forming a context window around the object of interest within the image, the context window formed by each cropping encompassing a predefined amount of context around the object that is different from the context window formed by another cropping.

13. The method of claim 8, wherein the method used to obtain the location of the object of interest within the images in the subset of images is an automatic object identification method.

14. The method of claim 13, wherein the cropping of the images in the subset of images is performed multiple times for each image, the cropping forming a context window around the object of interest within the image, the context window formed by each cropping encompassing a predefined amount of context around the object that is different from the context window formed by another cropping.

15. A non-transitory computer-readable medium storing computer-readable instructions thereon, the computer-readable instructions comprising:
instructions for causing a processor to obtain a plurality of images from at least one digital camera according to a particular use case, each image in the plurality of images having an object of interest therein;
instructions for causing a processor to apply the ML based model to each image in the plurality of images to determine a classification for the object of interest within the image based on the particular use case;
instructions for causing a processor to detect whether an anomaly is present in the particular use case based on the classification of the object of interest within the image; and
instructions for causing a processor to initiate a corrective action in response to detection of the anomaly for the particular use case;
wherein the ML based model is trained using a subset of images in the plurality of images and at least one cropped version of each image in the subset of images, and wherein cropping is performed based on a method used to obtain a location of an object of interest within each image in the subset of images,
wherein the method used to obtain the location of the object of interest within the images in the subset of images is in particular a manual object identification method,
wherein the cropping of the images in the subset of images is in particular performed one time for each image, the cropping forming a context window around the object of interest within the image that encompasses a predefined amount of context around the object,
wherein the method used to obtain the location of the object of interest within the images in the subset of images is in particular a semi-manual object identification method or an automatic object identification method,
wherein the cropping of the images in the subset of images is in particular performed multiple times for each image, the cropping forming a context window around the object of interest within the image, the context window formed by each cropping encompassing a predefined amount of context around the object that is different from the context window formed by another cropping.
